(19) Europäisches Patentamt
European Patent Office
Office européen des brevets

(11) **EP 1 245 344 B1**

(12) **EUROPÄISCHE PATENTSCHRIFT**

(45) Veröffentlichungstag und Bekanntmachung des Hinweises auf die Patenterteilung:
**18.11.2009   Patentblatt 2009/47**

(51) Int Cl.:
***B25J 9/16*** *(2006.01)*

(21) Anmeldenummer: **02003694.3**

(22) Anmeldetag: **19.02.2002**

(54) **Reintegration einer digitalen Kamera in ein Bildverarbeitungssystem, welche aus einer kalibrierten Position in eine unkalibrierte Position versetzt worden ist**

Reintegration of a digital camera in an image processing system which is deplaced from a calibrated position in a non-calibrated position

Réintégration d'une caméra digitale dans un système de traitement d'image, qui est déplacée d'une position calibrée dans une position non-calibrée

(84) Benannte Vertragsstaaten:
**AT BE CH CY DE DK ES FI FR GB GR IE IT LI LU MC NL PT SE TR**

(30) Priorität: **27.03.2001   DE 10115149**

(43) Veröffentlichungstag der Anmeldung:
**02.10.2002   Patentblatt 2002/40**

(73) Patentinhaber:
• **VMT Bildverarbeitungssysteme GmbH**
  **69469 Weinheim (DE)**
• **TECMEDIC GmbH**
  **45877 Gelsenkirchen (DE)**

(72) Erfinder:
• **Winkler, Wolfgang, Prof. Dr.**
  **52477 Ahlsdorf (DE)**
• **Grünewald, Frank, Dr. Ing.**
  **64988 Birkenau (DE)**
• **Grünewald, Dirk, Dipl.-Ing.**
  **64584 Biebesheim (DE)**

• **Lilientahl, Angela, Dipl.-Ing.**
  **45143 Essen (DE)**
• **Neddermeyer, Werner, Prof. Dr.**
  **64367 Mühltal (DE)**

(74) Vertreter: **Mierswa, Klaus**
  **Friedrichstrasse 171**
  **68199 Mannheim (DE)**

(56) Entgegenhaltungen:
**US-A- 6 101 455**

• **DIAS J ET AL: "Camera recalibration with hand-eye robotic system" 28. Oktober 1991 (1991-10-28), PROCEEDINGS OF THE INTERNATIONAL CONFERENCE ON INDUSTRIAL ELECTRONICS,CONTROL AND INSTRUMENTATION (IECON). KOBE, OCT. 28 - NOV. 1, 1991, NES YORK, IEEE, US, PAGE(S) 1923-1928 , XP010041988 ISBN: 0-87942-688-8 * Seite 1923, linke Spalte, Absatz 1 - Seite 1925, rechte Spalte, Absatz 7 ***

**Beschreibung**

Technisches Gebiet:

Die Erfindung betrifft ein Verfahren zur Reintegration digitaler Kameras mit gegebener Brennweite in ein Bildverarbeitungssystem, nachdem wenigstens eine von mindestens zwei ursprünglich auf ein gemeinsames Weltkoordinatensystem kalibrierten elektronischen Kameras aus der zuvor kalibrierten und bekannten Position ({A}) in eine unkalibrierte und unbekannte Position ({B}) versetzt worden ist, zur nachfolgenden Bestimmung der Position eines Werkstücks und der Position von Merkmalen des Werkstücks im 3D-Raum, wobei der Arbeitsabstand der Kameras zum zu vermessenden Werkstück groß im Vergleich zum erfolgten Versatz ist, gemäß dem Oberbegriff des Anspruchs 1.

Stand der Technik:

In der automatisierten Fertigung von z.B. Fahrzeugkarossen ist die digitale Bildverarbeitung heute Stand der Technik. Eine zentrale Anwendung in diesem Prozess ist die Positionserkennung des Werkstückes. Hierbei sehen kalibrierte Kameras auf das zu bearbeitende Objekt. Aus den sich ergebenden Pixeldaten bestimmter Objektmerkmale wird hiernach die 3-D-Werkstückpose in einem definierten Koordinatensystem berechnet.
Zur Kalibrierung der Kameras stehen zwei Methoden zur Verfügung. Bei der herkömmlichen Methode werden die Kamerapositionen vorab aus den Bilddaten eines Kalibrierkörpers oder einer Kalibriertafeltafel bestimmt. Ein derartiges Verfahren ist durch die EP 763 406 A1 bekannt geworden, um Manipulationen an einem Werkstück durchzuführen, mit mehreren mit diesem zusammenwirkenden räumlich getrennten elektronischen Kameras mit Bildverarbeitung. Jede der mindestens drei räumlich getrennten Kameras nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage gespeichert werden. Eine Vermessung der Kalibriertafeln zueinander erfolgt hiervon getrennt, wobei diese Werte ebenfalls gespeichert werden. Anschließend wird der zu vermessende Körper in den Raum zwischen den Kameras verbracht. Je ein charakteristischer Punkt auf dem in den Raum verbrachten Körper wird in je einer diesem zugeordneten Kamera abgebildet, so dass dessen Lage im Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in den Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen wie sie auch Lagerplatz benötigen. Der wesentliche Nachteil ist, dass die Kalibriertafeln mit einem großen Aufwand mechanisch im Sichtfeld der Kameras positioniert werden müssen und die Positionierbarkeit äußerst wiederholgenau sein muß. Diese Reproduzierbarkeit der Positionierung zu gewährleisten ist oft mit erheblichen Kosten verbunden, da die räumlichen Verhältnisse zum Beispiel in der Fördertechnik häufig schwierig sind.
Eine weitere Möglichkeit zur Gewinnung der Kamerapositionen ist die Antastung durch ein externes Messgestell, was die Einbringung aufwendig gefertigter Kalibrierkörper in die beengte Fertigungszelle hinfällig macht. Ein derartiges Verfahren ist in der DE 100 16 963 A1 vorgeschlagen worden unter Verwendung von mindestens zwei elektronischen Kameras und digitaler Bildverarbeitung, bei welchem die Kameras auf ein gemeinsames Weltkoordinatensystem kalibriert werden und anschließend das Werkstück in den Raum zwischen den Kameras verbracht wird. Zur Erstellung des gemeinsames Weltkoordinatensystems werden die Kameras einzeln als Lochkameramodelle behandelt, wobei eine direkte Vermessung der Position und der Orientierung der Lichteintrittsöffnung einer jeden Kamera erfolgt, indem die Position und die Orientierung der Lichteintrittsöffnung einer jeden Kamera in ihrem passiven Zustand mit einem separaten Meßsystem vermessen wird, welches zur direkten Antastung der Lichteintrittsöffnung imstande ist und welches die Position und die Orientierung der Lichteintrittsöffnung im Weltkoordinatensystem liefert. Das in den Raum zwischen den Kameras verbrachte Werkstück wird durch die nunmehr aktiven Kameras optisch abgebildet, die Videobilder werden mit einem Rechner zum Auffinden von Merkmalen des Werkstücks ausgewertet.
Aus der Kenntnis der Position der Kameras bezüglich des Weltkoordinatensystems, der Videobilder und der Koordinaten der Merkmale des Werkstücks in einem Koordinatensystem des Werkstücks werden durch einen Rechner nach der Methode des Bündelausgleichs die Position des Werkstücks in Weltkoordinaten sowie die Position der Merkmale des Werkstücks in Weltkoordinaten errechnet.
Kommt es beispielsweise infolge eines Stoßes gegen das Gehäuse zum Versatz einer Kamera, ist bei beiden vorgenannten Methoden eine erneute Kalibrierung unumgänglich. Im Realfall bedeutet dies, bezogen auf die oben beschriebenen Methoden, dass entweder der Kalibrierkörper in die Fertigungszelle verbracht werden und die Kameraposition neu berechnet, oder im Falle der Kalibrierung durch ein externes Messgestell die Position unter Zuhilfenahme eines Theodoliten neu vermessen werden muss.
Durch R. Gerdes, R. Otterbach, R. Kammüller: Kalibrierung eines digitalen Bildverarbeitungssystems mit CCD-Kamera, in: tm-Technisches Messer 60, 1993, 6, Seite 255-261 (Teil 1) und 60, 1993, 7/8, Seiten 283-288 (Teil 2) ist ein Verfahren zur Kalibrierung eines digitalen Bildverarbeitungssystems zur Bestimmung der relevanten Modellparameter bekannt geworden. Dabei wird die Lage der Kamera im Raum durch die Position und Orientierung des Kamerakoordinatensystems durch drei Translations- und drei Rotationsparameter bezüglich eines festen Weltkoordinatensystems bestimmt. Neben diesen Parametern der äußeren Orientierung werden für die Modellbildung Parameter der inneren Orientierung verwendet, um die internen Zusammenhänge der Kameraoptik und der Bildaufnahme zu beschreiben, wie Bildweite, Linsenverzerrungskoeffizienten, Kippwinkel, Skalierungsfaktoren sowie Koordnianten des Hauptpunktes, der Schnittpunkt der optischen Achse mit der Sensorebene. Es wird eine Koordinatentransformation zur Bestimmung der Modellparameter sowie eine exakte Lagebestimmung des Fluchtpunktdreiecks durchgeführt.

Durch die DE 195 02 459 A1 ist ein Verfahren zur dreidimensionalen optischen Vermessung der Oberfläche von Objekten mit großer Punktdichte bekannt geworden, bei dem mittels eines Projektors veränderbare Lichtstrukturen auf die zu vermessende Oberfläche projiziert und mittels einer Videokamera aufgenommen wird, wobei in einer Kalibrierung die inneren und äußeren Orientierungen der Kamera und des Projektors bestimmt und die Koordinaten der den Bildpunkten entsprechenden Punkte auf der Objektoberfläche berechnet. Dabei wird ein und derselbe Bereich mindestens aus einer von der Projektionsrichtung unterschiedlichen Richtung bei unveränderter Position und Projektionsrichtung des Projektors aufgenommen und mit Hilfe von Marken auf der Objektoberfläche unter Anwendung der Bündelausgleichsrechnung die Kalibrierung durchgeführt. Ein weiteres Verfahren zum Kontrollieren der relativen oder absoluten Position einer Anzahl fester, beweglicher oder ersetzbarer Punkte unter Anwendung eines Netzes von Hilfsreferenzpunkten ist durch die EP 0 700 506 B1, DE 694 09 513T2, bekannt geworden.

Des Weiteren ist durch die US-A-6101455 eine Fertigungszelle bekannt geworden, die Roboter, Videokameras und Projektoren für strukturiertes Licht enthält und welche dadurch kalibriert wird, indem mindestens drei Passpunkte, welche mit einer Kamera beobachtet werden, mit dem Roboter definiert verschoben werden. Die kompletten Informationen werden über die Kamerakalibrierung und der Struktur der Abbildung des Projektors bestimmt. Der Roboter wird des Weiteren dazu verwendet, um relative Bewegungen zwischen den Merkmalen und der Kamera- sowie der Projektorposition durchzuführen. Folglich ist diese Technik auf feste und bewegliche Kamerapositionen anwendbar. Außer dem Profil der Zieloberfläche gibt es keine Anforderung, die absoluten oder relativen Positionen oder Verhältnisse zwischen der Kamera, der Merkmale, der Lichtquelle und des Roboters von extern zu bestimmen. Entweder werden einzelne oder mehrere Kameras unabhängig eingesetzt oder als Stereokameras zum Koordinatensystem des Roboters kalibriert und somit als Messinstrumente benutzt.

Als weiterer Stand der Technik ist zu der benannten Problematik anzugeben: R. Lenz: Linsenfehlerkorrigierte Eichung von Halbleiterkameras mit Standardobjektiven für hochgenaue 3D Messungen in Echtzeit; in E. Paulus, Hrsg., Mustererkennung, Informatik- Fachberichte, S. 212-216; DAGM, 1987.

R. Lenz, D. Fritsch: Accuracy of videometry with CCD sensors; in ISPRS Journal of Photogrammetry and Remote Sensing. 45(1990) 90-110.

Bacakoglu, M. S. Kamel: A Three-Step Camera Calibration Method; in IEEE Transactions on Instrumentation and Measurement. Vol. 46. 1165-1171, 1997.

S. Lanser, C. Zierl: Robuste Kalibrierung von CCD-Sensoren für autonome mobile Systeme; in Konferenz- Einzelbericht: Autonome mobile Systeme, 11.Fachgespräch, Inf. aktuell, 172-181, 1995.

A. Meisel: 3D- Bildverarbeitung für feste und bewegte Kameras; in Fortschritte in der Robotik 21. Hrsgb. w. Ameling, M. Weck. Vieweg 1993.

W.H. Press, B.P. Flannery, S.A. Teukolsky and W.T. Vetterlink. Numerical Recipes in C. Cambridge, 1989.

Technische Aufgabe:

Der Erfindung liegt die Aufgabe zugrunde, ein Verfahren anzugeben, mit welchem eine verstellte Kamera in die alte, nicht verstellte Position reinintegriert werden kann, was auf rechnerische Weise geschehen soll, ohne dass die verstellte Kamera durch abermals in die Fertigungszelle eingebrachte Kalibriertafeln neu kalibriert und berechnet oder mittels eines Theodoliten neu vermessen werden muss.

Offenbarung der Erfindung und deren Vorteile:

Die Lösung der Aufgabe besteht bei einem Verfahren der eingangs genannten Gattung erfindungsgemäß darin, dass zur Herstellung des Zusammenhangs zwischen Weltkoordinatensystem ({W}) und Kamerakoordinatensystem ({K}) mindestens zwei nicht vermessene, in keinem der beiden Koordinatensysteme vollständig bekannte Messmarken als Fixpunkt in jedes Kamerabild einer jeden Kamera eingebracht werden, dass Abbildungsstrahl-Einheitsvektoren $\begin{bmatrix} ^{B}\vec{p}_{i}{}' \end{bmatrix}$ von der verstellten Kamera in der unbekannten Position ({B}) zu den Messmarken angenommen werden, wobei die Bilder als idealisierte Bilder einer Lochkamera behandelt werden und die sich abbildenden Messmarken Pixeldaten in X- und Y-Kamera-Koordinaten ergeben, und dass ausgehend von der Gleichung

$$^A\vec{p}_i{}' = {}_B^A T \cdot {}^B\vec{p}_i{}' \qquad \text{Gleichung 1}$$

zwischen den neu erhaltenen Abbildungsstrahl-Einheitsvektoren $\left[^B\vec{p}_i{}'\right]$ und den entsprechenden Abbildungsstrahl-Einheitsvektoren $\left[^A\vec{p}_i{}'\right]$ der Position der ehemals kalibrierten Kamera zu den Messmarken durch eine Ausgleichsrechnung-Linearisierung nach Newton die Transformation $\left(_B^A T\right)$ und daraus der resultierende Fehler des Versatzes errechnet wird, und in der Gleichung 1 i = 1...n die Anzahl der Messmarken bedeutet mit

$$^{A,B}\vec{p}_i = {}^{A,B}\lambda_i \cdot \begin{pmatrix} ^{A,B}X_i \\ ^{A,B}Y_i \\ f \end{pmatrix} \cdot \frac{1}{\sqrt{^{A,B}X^2 + {}^{A,B}Y^2 + f^2}} = {}^{A,B}\lambda_i \begin{pmatrix} ^{A,B}X_i{}' \\ ^{A,B}Y_i{}' \\ f' \end{pmatrix} = {}^{A,B}\lambda_i \cdot {}^{A,B}\vec{p}_i{}' \qquad \text{Gl.2}$$

wobei der translatorische Kameraversatz vernachlässigbar ist, so dass sich aus der Gleichung 1 die Gleichung

$$^A\vec{p}_i{}' = {}_B^A T \cdot {}^B\vec{p}_i{}' = {}_B^A Rot \cdot {}^B\vec{p}_i{}' \qquad \text{Gleichung 4}$$

mit

$$_B^A Rot = \begin{pmatrix} \cos\gamma\cos\beta & \cos\gamma\sin\beta\sin\alpha - \sin\gamma\cos\alpha & \cos\alpha\sin\beta\cos\gamma + \sin\alpha\sin\gamma \\ \sin\gamma\cos\beta & \sin\gamma\sin\beta\sin\alpha + \cos\alpha\cos\gamma & \sin\gamma\sin\beta\cos\alpha - \cos\gamma\sin\alpha \\ -\sin\beta & \cos\beta\sin\alpha & \cos\beta\cos\alpha \end{pmatrix}$$

ergibt.

Das erfindungsgemäße Verfahren besitzt den Vorteil, dass mit demselben anhand von nicht im Weltkoordinatensystem sowie im Kamerakoordinatensystem vermessenen Fixpunkten eine Reintegration einer verstellten Kamera durch mathematische Berechnung erfolgt, ohne dass die verstellte Kamera durch abermals in die Fertigungszelle eingebrachte Kalibriertafeln neu kalibriert und berechnet oder mittels eines Theodoliten neu vermessen werden muss.

In weiterer Ausgestaltung der Erfindung werden als Messmarken solche Fixpunkte gewählt, welche unabhängig vom Werkstück sind und zum Beispiel am Boden der Fertigungszelle angeordnet sind, in welcher sich das zu vermessende Werkstück befindet. Der Arbeitsabstand der Kamera kann beispielsweise mehrere Meter im Vergleich zu einigen Millimetern Versatz der Kamera betragen.

Das Verfahren wird somit bei einem Arbeitsabstand der Kamera zum zu vermessenden Werkstück durchgeführt, welcher zum Versatz der Kamera relativ groß ist, beispielsweise beträgt der Arbeitsabstand der Kamera mehrere Meter im Vergleich zu einigen Millimetern Versatz der Kamera.

Die Erfindung ist nachfolgend an einem Beispiel in der Zeichnung erläutert, in der zeigen:

Figur 1    die Darstellung einer Kamera in einer unbekannten Position {B}, welche aus einer kalibrierten, bekannten Position {A} translatorisch in die unkalibrierte Position {B} versetzt worden ist und

Figur 2    die Abbildung einer Meßmarke im idealisierten Bild einer Lochkamera mit der gegebenen Brennweite f, wobei das idealisierte Bild einer Lochkamera der Berechnung zur Reintegration der verstellten Kamera zugrunde gelegt wird.

Wege zur Ausführung der Erfindung:

Das erfindungsgemäße Verfahren zur Reintegration einer verstellten Kamera 1 wird in seinem Lösungsansatz durchgeführt anhand von weder im Weltkoordinatensystem {W} noch im Kamerakoordinatensystem {K} vermessenen Fixpunkten:

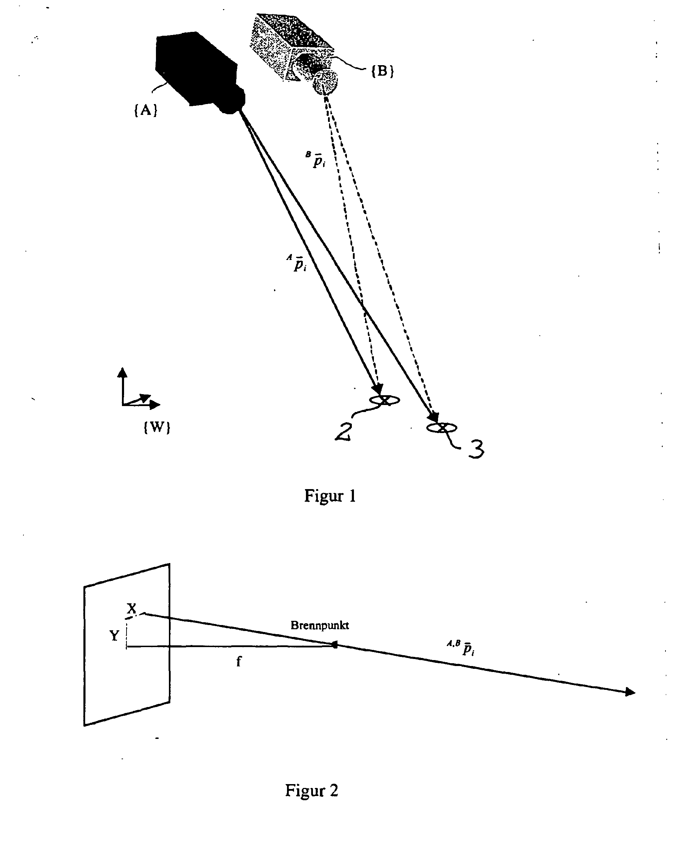

Figur 1 zeigt die Darstellung einer Kamera 1 in einer unbekannten Position {B}, wobei die Kamera 1 aus einer kalibrierten, bekannten Position {A} translatorisch in die unkalibrierte Position {B} versetzt worden ist. Hierbei werden gemäß der Figur 1 mindestens zwei nicht vermessene, d.h. in keinem Koordinatensystem bekannte, Meßmarken 2, 3 als Fixpunkte, zum Beispiel am Boden einer nicht gezeigten Fertigungszelle, unabhängig von einem ebenfalls nicht gezeigten Werkstück in jedes Kamerabild eingebracht. Ist die Kamera 1 zum Beispiel versehentlich verstellt worden, so ist der Zusammenhang zwischen Weltkoordinatensystem {W} und Kamerakoordinatensystem {K} nicht mehr bekannt. Gesucht ist also die Abbildung ${}^{A}_{B}T$ von der nicht verstellten, also bezüglich Weltkoordinatensystem {W} bekannten Kameraposition {A} zur verstellten Kameraposition {B}.

Figur 2 zeigt die Abbildung einer Meßmarke im idealisierten Bild einer Lochkamera mit der gegebenen Brennweite f, wobei das idealisierte Bild einer Lochkamera der Berechnung zur Reintegration der verstellten Kamera zugrunde gelegt wird. Die Meßmarken 2, 3 bilden sich in einem idealisierten Bild der Lochkamera gemäß der Figur 2 mit ihren X- und Y-Positionen ab, wobei X, Y die sich ergebenden Pixeldaten der i-ten Meßmarke sind; f stellt in Figur 2 die Brennweite der Kamera dar.

Folglich ist die Transformation ${}^{A}_{B}T$ gesucht, welche die Vektoren ${}^{B}\vec{p}_i$ auf ${}^{A}\vec{p}_i$ abbildet:

$$^{A}\vec{p}_{i} = {}^{A}_{B}T \cdot {}^{B}\vec{p}_{i} \qquad \text{[Gleichung 1]}$$

wobei i=1....n die Anzahl der Messmarken bedeutet mit:

$$^{A,B}\vec{p}_{i} = {}^{A,B}l_{i} \cdot \begin{pmatrix} {}^{A,B}X_{i} \\ {}^{A,B}Y_{i} \\ f \end{pmatrix} \cdot \frac{1}{\sqrt{{}^{A,B}X^{2} + {}^{A,B}Y^{2} + f^{2}}} = {}^{A,B}l_{i} \begin{pmatrix} {}^{A,B}X_{i}^{'} \\ {}^{A,B}Y_{i}^{'} \\ f^{'} \end{pmatrix} = {}^{A,B}l_{i} \cdot {}^{A,B}\vec{p}_{i}^{'}$$

$$\text{[Gleichung 2]}$$

Dabei sind die ${}^{A,B}\lambda_{i}$ die nicht bekannten Längen der Vektoren ${}^{A,B}\vec{p}_{i}$ von der Kameraposition {A} bzw. {B} zu den i-ten Messmarken. Im allgemeinen gilt bei translatorischem Kameraversatz:

$$^{A}\lambda_{i} \neq {}^{B}\lambda_{i}$$

daß heißt, das die Vektorlängen nicht erhalten bleiben.

Ist der Arbeitsabstand der Kamera zum Objekt relativ zum Versatz groß, wenn also der Arbeitsabstand mehrere Meter zum Versatz von einigen Millimetern beträgt, so gilt:

$$\frac{^{A}\lambda_{i}}{^{B}\lambda_{i}} \approx 1$$

[Gleichung 3]

das heißt, daß die Translation entfällt. Durch Vernachlässigung des translatorischen Kameraversatzes ergibt sich aus Gleichung 1:

$$^{A}\vec{p}_{i}' = {}_{B}^{A}T \cdot {}^{B}\vec{p}_{i}' = {}_{B}^{A}Rot \cdot {}^{B}\vec{p}_{i}'$$

[Gleichung 4]

mit

$$^{A}_{B}Rot = \begin{pmatrix} \cos\gamma\cos\beta & \cos\gamma\sin\beta\sin\alpha - \sin\gamma\cos\alpha & \cos\alpha\sin\beta\cos\gamma + \sin\alpha\sin\gamma \\ \sin\gamma\cos\beta & \sin\gamma\sin\beta\sin\alpha + \cos\alpha\cos\gamma & \sin\gamma\sin\beta\cos\alpha - \cos\gamma\sin\alpha \\ -\sin\beta & \cos\beta\sin\alpha & \cos\beta\cos\alpha \end{pmatrix}$$

Mit den normierten Abbildungsstrahlen kann ein nichtlineares Gleichungssystem nach der Gleichung 4 bestimmt werden, welches mit Standardverfahren, wie Linearisierung nach Newton und Ausgleichrechnung, mit z.B. SVD-Zerlegung, zu lösen ist.

Die nachfolgende Tabelle zeigt den resultierenden Fehler bei der Positionserkennung nach Reintegration einer Kamera in ein reales System bei einem Arbeitsabstand der Kamera vom Werkstück bzw. von der Meßmarke von ungefähr 3 Meter:

| Fehler bei kleinem Versatz (leichter Stoß) | Fehler bei mittlerem Versatz (mittlerer Stoß) | Fehler bei großem Versatz (starker Stoß) |
|---|---|---|
| Translation: | Translation: | Translation: |
| $t_x=0.012$ | $t_x=0.154$ | $t_x=0.021$ |
| $t_y=0.015$ | $t_y=0.197$ | $t_y=-0.026$ |
| $t_z=-0.010$ | $t_z=-0.094$ | $t_z=-0.190$ |
| Rotation: | Rotation: | Rotation: |
| $\alpha=0.001$ | $\alpha=0.013$ | $\alpha=-0.031$ |
| $\beta=-0.002$ | $\beta=-0.027$ | $\beta=-0.011$ |
| $\gamma=-0.001$ | $\gamma=-0.013$ | $\gamma=0.000$ |

Fehler in der Positionserfassung nach Reintegration einer Kamera

Die Tabelle zeigt, mit welchem zusätzlichem Fehler nach einem Stoß gegen die Kamera mit Reintegration zu rechnen ist.

Gewerbliche Anwendbarkeit:

Der Gegenstand der Erfindung ist insbesondere in der automatisierten Fertigung von z.B. Fahrzeugkarossen zur Erkennung der Positionserkennung des Werkstückes, auf dem Gebiet der Kalibrierung von autonomen mobilen Systemen mit Kameras, insbesondere mit CCD-Sensoren, einsetzbar, um eine digitale Kamera, welche aus einer kalibrierten Position in eine unkalibrierte Position versetzt worden ist, zum Beispiel durch einen Schlag oder Stoß, wieder in das Bildverarbeitungssystem der Positionserkennung mit definiertem Koordinatensystem zu reintegrieren. Von besonderem Vorteil ist dabei, dass die verstellte Kamera nicht nochmals durch Kalibriertafeln neu kalibriert oder durch einen Theodoliten neu vermessen werden muß.

**Patentansprüche**

1. Verfahren zur Reintegration digitaler Kameras (1) mit gegebener Brennweite in ein Bildverarbeitungssystem, nachdem wenigstens eine von mindestens zwei ursprünglich auf ein gemeinsames Weltkoordinatensystem kalibrierten elektronischen Kameras aus der zuvor kalibrierten und bekannten Position ({A}) in eine unkalibrierte und unbekannte Position ({B}) versetzt worden ist, zur nachfolgenden Bestimmung der Position eines Werkstücks und der Position von Merkmalen des Werkstücks im 3D-Raum, wobei der Arbeitsabstand der Kameras zum zu vermessenden Werkstück groß im Vergleich zum erfolgten Versatz ist, **dadurch gekennzeichnet, dass** zur Herstellung des Zusammenhangs zwischen Weltkoordinatensystem ({W}) und Kamerakoordinatensystem ({K}) mindestens zwei nicht vermessene, in keinem der beiden Koordinatensysteme vollständig bekannte Messmarken (2,3) als Fixpunkt in jedes Kamerabild einer jeden Kamera (1) eingebracht werden, dass Abbildungsstrahl-Einheitsvektoren $\left[ {}^{B}\vec{p}_i{}' \right]$ von der verstellten Kamera (1) in der unbekannten Position ({B}) zu den Messmarken (2,3) ermittelt werden, wobei die Bilder als idealisierte Bilder einer Lochkamera angenommen werden und die sich abbildenden Messmarken (2,3) Pixeldaten in X- und Y-Kamera-Koordinaten ergeben, und dass ausgehend von der Gleichung

$$ {}^{A}\vec{p}_i{}' = {}^{A}_{B}T \cdot {}^{B}\vec{p}_i{}' \qquad \text{Gleichung 1}$$

zwischen den neu erhaltenen Abbildungsstrahl-Einheitsvektoren $\left[ {}^{B}\vec{p}_i{}' \right]$ und den entsprechenden Abbildungsstrahl-Einheitsvektoren $\left[ {}^{A}\vec{p}_i{}' \right]$ der Position der ehemals kalibrierten Kamera (1) zu den Messmarken (2,3) durch eine Ausgleichsrechnung-Linearisierung nach Newton die Transformation ${}^{A}_{B}T$ und daraus der resultierende Fehler des Versatzes errechnet wird, und in der vorstehenden Gleichung 1 i = 1....n die Anzahl der Messmarken bedeutet mit

$$ {}^{A,B}\vec{p}_i = {}^{A,B}\lambda_i \cdot \begin{pmatrix} {}^{A,B}X_i \\ {}^{A,B}Y_i \\ f \end{pmatrix} \cdot \frac{1}{\sqrt{{}^{A,B}X^2 + {}^{A,B}Y^2 + f^2}} = {}^{A,B}\lambda_i \begin{pmatrix} {}^{A,B}X_i' \\ {}^{A,B}Y_i' \\ f' \end{pmatrix} = {}^{A,B}\lambda_i \cdot {}^{A,B}\vec{p}_i{}' \qquad \text{Gleichung 2}$$

wobei der translatorische Kameraversatz vernachlässigbar ist, so dass sich aus der Gleichung 1 die Gleichung

$$ {}^{A}\vec{p}_i{}' = {}^{A}_{B}T \cdot {}^{B}\vec{p}_i{}' = {}^{A}_{B}Rot \cdot {}^{B}\vec{p}_i{}' \qquad \text{Gleichung 4}$$

mit

$$\begin{aligned}{}^{A}_{B}Rot = \begin{pmatrix} \cos\gamma\cos\beta & \cos\gamma\sin\beta\sin\alpha - \sin\gamma\cos\alpha & \cos\alpha\sin\beta\cos\gamma + \sin\alpha\sin\gamma \\ \sin\gamma\cos\beta & \sin\gamma\sin\beta\sin\alpha + \cos\alpha\cos\gamma & \sin\gamma\sin\beta\cos\alpha - \cos\gamma\sin\alpha \\ -\sin\beta & \cos\beta\sin\alpha & \cos\beta\cos\alpha \end{pmatrix}\end{aligned}$$

ergibt.

2. Verfahren nach Anspruch 1, **dadurch gekennzeichnet,**
   **dass** als Messmarken (2,3) solche Fixpunkte gewählt werden, welche unabhängig vom Werkstück sind und zum Beispiel am Boden der Fertigungszelle angeordnet sind, in welcher sich das zu vermessende Werkstück befindet.

**Claims**

1. A method to reintegrate digital cameras (1) having a given focal length into an image processing system, according to which at least one of at least two electronic cameras that had been originally calibrated to a joint world coordinate system has been offset from the previously calibrated and known position ({A}) to an uncalibrated and unknown position ({B}), for purposes of subsequently determining the position of a workpiece and the position of features of the workpiece in 3D-space, whereby the working distance of the cameras to the workpiece to be measured is large in comparison to the offset that has taken place,
   **characterized in that**, in order to establish the relationship between the world coordinate system ({W}) and the camera coordinate system ({K}), at least two measuring marks (2,3), which have not been measured and which are not completely known in either of the two coordinate systems, are introduced as a fixed point into each camera image of each of the cameras (1), **in that** imaging ray unit vectors $\left[{}^{B}\vec{p}'_i\right]$ from the adjusted camera (1) in the unknown position ({B}) relative to the measuring marks (2,3) are ascertained, wherein the images are assumed to be idealized images of a pinhole camera, and the measuring marks (2,3) that are being imaged yield pixel data in X- und Y-camera coordinates, and **in that**, starting from the equation

$$ {}^{A}\vec{p}'_i = {}^{A}_{B}T \cdot {}^{B}\vec{p}'_i \qquad \text{Equation 1,} $$

between the newly obtained imaging ray unit vectors $\left[{}^{B}\vec{p}'_i\right]$ and the corresponding imaging ray unit vectors $\left[{}^{A}\vec{p}'_i\right]$ of the position of the previously calibrated camera (1) relative to the measuring marks (2,3), the transformation ${}^{A}_{B}T$ and, on this basis, the resulting error of the offset are calculated by means of a compensation calculation linearization according to Newton, and in Equation 1 above, i = 1....n stands for the number of measuring marks with

$$ {}^{A,B}\vec{p}_i = {}^{A,B}\lambda_i \cdot \begin{pmatrix} {}^{A,B}X_i \\ {}^{A,B}Y_i \\ f \end{pmatrix} \cdot \frac{1}{\sqrt{{}^{A,B}X^2 + {}^{A,B}Y^2 + f^2}} = {}^{A,B}\lambda_i \begin{pmatrix} {}^{A,B}X'_i \\ {}^{A,B}Y'_i \\ f' \end{pmatrix} = {}^{A,B}\lambda_i \cdot {}^{A,B}\vec{p}'_i \qquad \text{Equation 2,} $$

wherein the translational camera offset is negligible, so that, starting from Equation 1, the result is the following equation

$$^A_{\phantom{B}}\overset{\shortmid}{p}{}'_i = ^A_B T \cdot {}^B\overset{\shortmid}{p}{}'_i = ^A_B Rot \cdot {}^B\overset{\shortmid}{p}{}'_i \qquad \text{Equation 4,}$$

wherein

$$^A_B Rot = \begin{pmatrix} \cos\gamma\cos\beta & \cos\gamma\sin\beta\sin\alpha - \sin\gamma\cos\alpha & \cos\alpha\sin\beta\cos\gamma + \sin\alpha\sin\gamma \\ \sin\gamma\cos\beta & \sin\gamma\sin\beta\sin\alpha + \cos\alpha\cos\gamma & \sin\gamma\sin\beta\cos\alpha - \cos\gamma\sin\alpha \\ -\sin\beta & \cos\beta\sin\alpha & \cos\beta\cos\alpha \end{pmatrix}.$$

2. The method according to Claim 1, **characterized in that** ,
the fixed points selected as the measuring marks (2,3) are those which are independent of the workpiece and which are arranged, for example, at the bottom of the production cell where the workpiece to be measured is located.

**Revendications**

1. Procédé pour la réintégration de caméras digitales (1) possédant une distance focale donnée dans un système de traitement d'image, après qu'au moins l'une d'au moins deux caméras électroniques qui, à l'origine, étaient calibrées selon un système de coordonnées mondial commun, a été déplacée à partir de la position précédemmant calibrée et connue ({A}) vers une position non calibrée et non connue ({B}), afin de déterminer ensuite la position d'une pièce et la position de caractéristiques de ladite pièce dans l'espace 3D, la distance de travail entre les caméras et la pièce à mesurer étant grande par rapport au déplacement effectué, **caractérisé en ce que**, pour établir la relation entre le système de coordonnées mondial ({W}) et le système de coordonnées des caméras ({K}), au moins deux repères de mesure (2,3), qui n'ont pas été mesurés et qui ne sont pas entièrement connus dans aucun des deux systèmes de coordonnées, sont introduits comme point fixe dans chaque image de chacune des caméras (1), que des vecteurs unitaires du faisceau d'image $\left[ {}^B\vec{p'_i} \right]$ de la caméra déplacée (1) dans la position non connue ({B}) vers les repères de mesure (2,3) sont déterminés en considérant les images comme des images idéalisées d'une chambre noire à sténopé, et les repères de mesure (2,3) qui sont représentés, donnent des données pixel en coordonnées X et Y de la caméra et que, en partant de l'équation

$$^A\vec{p}{}_i{}' = {}^A_B T \cdot {}^B\vec{p}{}_i{}' \qquad \text{équation 1,}$$

on calcule, entre les vecteurs unitaires nouveaux du faisceau d'image $\left[ {}^B\vec{p'_i} \right]$ et les vecteurs unitaires du faisceau d'image correspondants $\left[ {}^A\vec{p'_i} \right]$ de la position de la caméra précédemmant calibrée (1) par rapport aux repères de mesure (2,3), la transformation ${}^A_B T$ à l'aide d'un calcul de compensation-linéarisation selon Newton, et à partir de cette transformation, l'erreur résultant du déplacement et que, dans l'équation 1 ci-dessus, i = 1....n signifie le nombre de repères de mesure avec

$$^{A,B}\overset{\mathbf{r}}{p_i} = {}^{A,B}\lambda_i \cdot \begin{pmatrix} {}^{A,B}X_i \\ {}^{A,B}Y_i \\ f \end{pmatrix} \cdot \frac{1}{\sqrt{{}^{A,B}X^2 + {}^{A,B}Y^2 + f^2}} = {}^{A,B}\lambda_i \begin{pmatrix} {}^{A,B}X_i' \\ {}^{A,B}Y_i' \\ f' \end{pmatrix} = {}^{A,B}\lambda_i \cdot {}^{A,B}\overset{\mathbf{r}'}{p_i} \qquad \text{équation 2,}$$

le déplacement translatoire de la caméra étant négligeable de sorte que, en partant de l'équation 1, on obtient l'équation suivante

$$^A\overset{\mathbf{I}'}{p_i} = {}^A_B T \cdot {}^B\overset{\mathbf{I}'}{p_i} = {}^A_B Rot \cdot {}^B\overset{\mathbf{I}'}{p_i} \qquad \text{équation 4,}$$

avec

$$^A_B Rot = \begin{pmatrix} \cos\gamma\cos\beta & \cos\gamma\sin\beta\sin\alpha - \sin\gamma\cos\alpha & \cos\alpha\sin\beta\cos\gamma + \sin\alpha\sin\gamma \\ \sin\gamma\cos\beta & \sin\gamma\sin\beta\sin\alpha + \cos\alpha\cos\gamma & \sin\gamma\sin\beta\cos\alpha - \cos\gamma\sin\alpha \\ -\sin\beta & \cos\beta\sin\alpha & \cos\beta\cos\alpha \end{pmatrix}.$$

**2.** Procédé selon la revendication 1, **caractérisé en ce que**
les points fixes choisis comme repères de mesure (2,3) sont indépendants de la pièce et sont disposés par exemple au fond de la cellule d'usinage dans laquelle se trouve la pièce à mesurer.

{A}

{B}

$^B\bar{p}_i$

$^A\bar{p}_i$

{W}

2

3

Figur 1

X

Y

Brennpunkt

f

$^{A,B}\bar{p}_i$

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 763406 A1
- DE 10016963 A1
- DE 19502459 A1
- EP 0700506 B1
- DE 69409513 T2
- US 6101455 A

**In der Beschreibung aufgeführte Nicht-Patentliteratur**

- **Durch R. Gerdes ; R. Otterbach ; R. Kammüller.** Kalibrierung eines digitalen Bildverarbeitungssystems mit CCD-Kamera. *tm-Technisches Messer,* 1993, vol. 60 (6), 255-261
- *TM-TECNISCHES MESSER,* 1993, vol. 60 (7/8), 283-288
- Mustererkennung, Informatik- Fachberichte. 1987, 212-216
- **R. Lenz ; D. Fritsch.** Accuracy of videometry with CCD sensors. *ISPRS Journal of Photogrammetry and Remote Sensing,* 1990, vol. 45, 90-110
- **Bacakoglu, M. ; S. Kamel.** A Three-Step Camera Calibration Method. *IEEE Transactions on Instrumentation and Measurement,* 1997, vol. 46, 1165-1171
- **S. Lanser ; C. Zierl.** Robuste Kalibrierung von CCD-Sensoren für autonome mobile Systeme; in Konferenz- Einzelbericht: Autonome mobile Systeme. *Fachgespräch, Inf. aktuell,* 1995, vol. 11, 172-181
- 3D- Bildverarbeitung für feste und bewegte Kameras. **A. Meisel.** Fortschritte in der Robotik. 1993
- **W.H. Press ; B.P. Flannery ; S.A. Teukolsky ; W.T. Vetterlink.** *Numerical Recipes,* 1989